# EUROPEAN PATENT SPECIFICATION

(11) **EP 3 649 688 B1**
(45) Date of publication and mention of the grant of the patent: **20.10.2021**
(21) Application number: 18746755.0
(22) Date of filing: 22.06.2018
(51) Int. Cl.: H01M 4/58, H01M 4/04, H01M 4/131, H01M 4/38, H01M 4/505, H01M 4/525, H01M 4/36, H01M 10/052

(54) **DUAL ACTIVE CATHODE MATERIALS**
DUALE AKTIVKATHODENMATERIALIEN
DOUBLES MATÉRIAUX DE CATHODE ACTIVE

(30) Priority: 07.07.2017 ZA 201704582
(43) Date of publication of application: 13.05.2020
(73) Proprietor: CSIR, 0184 Brummeria (ZA)
(72) Inventor: LUO, Hongze, 0184 Brummeria (ZA); SETENI, Bonani, 0184 Brummeria (ZA); RAPULENYANE, Nomasonto, 0184 Brummeria (ZA); MATHE, Mkhulu, 0184 Brummeria (ZA)
(74) Representative: Baker, Thomas Edward
(86) International application number: PCT/IB2018/054620
(87) International publication number: WO 2019/008465

(56) References cited:
- US-A1- 2013 252 107
- US-A1- 2015 050 522
- WHITACRE ET AL: "Dual active material composite cathode structures for Li-ion batteries", JOURNAL OF POWER SOURCES, ELSEVIER SA, CH, vol. 177, no. 2, 10 January 2008 (2008-01-10), pages 528-536, XP022450300, ISSN: 0378-7753, DOI: 10.1016/J.JPOWSOUR.2007.11.076
- KEVIN G GALLAGHER ET AL: "LiMnO(1)LiMOblended with LiFePOto achieve high energy density and pulse power capability", JOURNAL OF POWER SOURCES, ELSEVIER SA, CH, vol. 196, no. 22, 15 July 2011 (2011-07-15), pages 9702-9707, XP028283705, ISSN: 0378-7753, DOI: 10.1016/J.JPOWSOUR.2011.07.054 [retrieved on 2011-07-22]
- SHI S J ET AL: "Combustion synthesis and electrochemical performance of Li[Li0.2Mn0.54Ni0.13Co0.13]O2with improved rate capability", JOURNAL OF POWER SOURCES, ELSEVIER SA, CH, vol. 228, 30 November 2012 (2012-11-30), pages 14-23, XP028963193, ISSN: 0378-7753, DOI: 10.1016/J.JPOWSOUR.2012.11.091
- YOUNG-SIK HONG ET AL: "Synthesis and electrochemical properties of nanocrystalline Li[Ni x Li (1-2x)/3 Mn (2-x)/3 ]O 2 prepared by a simple combustion method", JOURNAL OF MATERIALS CHEMISTRY, vol. 14, no. 9, 26 March 2004 (2004-03-26) , pages 1424-1429, XP055512815, GB ISSN: 0959-9428, DOI: 10.1039/B311888F
- CHIKKANNANAVAR SATISHKUMAR B ET AL: "A review of blended cathode materials for use in Li-ion batteries", JOURNAL OF POWER SOURCES, vol. 248, 5 October 2013 (2013-10-05), pages 91-100, XP028783808, ISSN: 0378-7753, DOI: 10.1016/J.JPOWSOUR.2013.09.052

## Description

THIS INVENTION relates to dual active cathode materials. In particular, the invention relates to a process for producing a Li-rich dual active cathode material or a Li-rich dual active cathode material precursor, to a Li-rich dual active cathode material or a Li-rich dual active cathode material precursor when produced by the process, to a Li-rich dual active cathode material, to an electrochemical cell, to a method of making an electrochemical cell and to a method of operating an electrochemical cell.

Rechargeable lithium ion batteries (RLIBs) have proved themselves as the most attractive advanced battery technology for electric vehicles and portable electronics. Lithium-manganese rich cathode materials, for use in such batteries and cells, with a general formula of *x*Li₂MnO_{3·}*(1* - *x)* LiMO₂ (M = Mn, Ni, Co or Al) can deliver >200 mA h g⁻¹ practical discharge capacities and have high voltage windows ranging between 4.8 V - 2.0 V. Lithium-manganese rich cathode materials are however known for their rapid loss of capacity and poor cyclability which are associated with poor electron transfer. Additional problems associated with these materials include difficulty in preparation, poor continuous charge/discharge, poor rate capabilities, high reactivity with an electrolyte at high voltage, and high cost. Furthermore, LiCoO₂ which is an alternative cathode material often used in commercial products is expensive, toxic and has a low discharge capacity of 140 mA h g⁻¹. There is thus a need for lithium-based cathode materials that have an enhanced charge-discharge output, that use less expensive, more environmentally friendly materials, and that can be manufactured using a simple preparation method. Where the more environmentally friendly materials are domestically available, it will be an added advantage. Whitacre et al. (J. power Sources, vol. 177, p. 528-536) discloses dual active material composite cathode structures for lithium-ion batteries, the composite structures including a fully mixed mixture comprising equal mass fraction of a lithium rich layered oxide that is obtained by means of a gel synthesis combustion route, and a lithium containing olivine material.

According to the invention, there is provided a process for producing a Li-rich dual active cathode material precursor or a Li-rich dual active cathode material as defined in claims 1 and 2 respectively.

The Li-containing olivine material may be selected from the group consisting of LiFePO₄, LiCoPO₄, LiNiPO₄, LiMnPO₄, Li₃V₂(PO₄)₃ etc., and mixtures of two or more thereof.

In one embodiment of the invention, the Li-containing olivine material is LiFePO₄. The Li-rich layered oxide may be a Li-rich double-layered oxide or spinel.

The Li-rich layered oxide may be a Li-rich Mn-based layered oxide, and in particular a Li-rich Mn-based solid-solution system. In other words, the Li-rich layered oxide may be a Li-Mn-rich layered oxide.

The Li-rich layered oxide may have the general formulae Li[LiₓM₁₋ₓ]O₂ where M = Mn, Ni, Co, Al and 0 < x < 1.

The Li-rich layered oxide may be selected from the group consisting of Li_{1.2}Mn_{0.54}Ni_{0.13}Co_{0.13}O₂, Li[LiₓMn_{y}Ni_{z}Mₖ]O₂ where M = Co, Fe, Al etc., 0<x, and x+y+z+k=1, and mixtures of two or more thereof.

In one embodiment of the invention, the Li-rich layered oxide is Li_{1.2}Mn_{0.54}Ni_{0.13}Co_{0.13}O₂.

The molar ratio of the Li-rich layered oxide to the Li-containing olivine material may be between about 1:0.01 and about 1:1, preferably between about 1:0.01 and about 1:0.2, more preferably between about 1:0.02 and about 1:0.1, e.g. about 1:0.05.

The Li-rich dual active cathode material precursor is in the form of a powder or granulate. In the Li-rich dual active cathode material precursor, the Li-containing olivine material is nano-occluded within the Li-rich layered oxide. This provides the Li-rich dual active cathode material obtained from the Li-rich dual active cathode material precursor with an enhanced discharge capacity, rate performance and cyclability compared for example with Li_{1.2}Mn_{0.54}Ni_{0.13}Co_{0.13}O₂.

Annealing of the the Li-rich dual active cathode material precursor may be effected at a temperature which is sufficiently high to crystallize the material. The annealing may be effected for a period of time which is long enough to achieve a desired degree of annealing, i.e. to achieve a desired degree of crystallinity.

Annealing the Li-rich dual active cathode material precursor may include heating the powder or granulate under an inert atmosphere. The inert atmosphere may be an argon atmosphere.

Heating the powder may include heating the powder or granulate to a first temperature and maintaining the powder or granulate at the first temperature for a first period, and heating the powder or granulate to a second temperature and maintaining the powder or granulate at the second temperature for a second period.

The first temperature may be between about 100°C and about 700°C, preferably between about 200°C and about 600°C, more preferably between about 250°C and about 500°C, e.g. about 300°C.

The first period may be between about 30 minutes and about 1200 minutes, preferably between about 60 minutes and about 1000 minutes, more preferably between about 120 minutes and about 600 minutes, e.g. about 180 minutes.

The second temperature may be between about 550°C and about 1000°C, preferably between about 600°C and about 950°C, more preferably between about 700°C and about 900°C, e.g. about 800°C.

The second period may be between about 2 hours and about 24 hours, preferably between about 4 hours and about 20 hours, more preferably between about 6 hours and about 16 hours, e.g. about 12 hours.

During annealing, the temperature of the powder or granulate may be increased at a rate of between about 0.1°C per minute and about 20°C per minute, preferably between about 0.5°C per minute and about 15°C per minute, more preferably between about 1°C per minute and about 10°C per minute, e.g. about 5°C per minute.

Occluding the Li-containing olivine material in the Li-rich layered oxide is done by means of combustion synthesis as specified in claim 1.

By 'combustion synthesis' is meant self-propagating high-temperature synthesis which comprises subjecting a mixture of reactants to an initial high temperature to initiate an exothermic reaction of the reactants throughout the mixture. The reaction is thus a self-sustaining reaction, and a powdered or granular product is typically obtained as a product. The product granules or particles may be in the nanometer scale range, i.e. may have diameters or cross-sectional dimensions of 1-100nm. The combustion synthesis may include the use of a solution, and the combustion synthesis may be an embodiment of so-called solution combustion synthesis ('SCS').

The combustion synthesis may thus include forming a homogenous solution of reactants (i.e. metal compounds) and the Li-containing olivine material in a solvent, and removing all or most of the solvent to form a reaction mixture, which is typically in solid or gel form. The combustion synthesis typically then includes combusting the reaction mixture in an exothermic reaction to provide the Li-rich dual active cathode material precursor. The Li-rich dual active cathode material precursor produced in this way is a powdered or granular product.

Typically, the process includes heating the reaction mixture to initiate the combustion of the reaction mixture. The exothermic combustion reaction will endure until the Li-rich dual active cathode material precursor is fully formed, i.e. until no more reactant (particularly a fuel) remains to partake in the exothermic combustion reaction. Typically the reaction time is in the range of 1-10 minutes. SCS is thus a technique for producing powdered/granular product rapidly, simply and effectively.

The exothermic combustion reaction may be effected at atmospheric pressure.

Removing the solvent to form the reaction mixture may include evaporating the solvent. The solvent may be evaporated at atmospheric pressure whilst heating the homogenous solution.

Preferably, the homogenous solution is agitated whilst heating the homogenous solution to remove the solvent.

In one embodiment of the invention, the homogenous solution is heated to a temperature of about 100°C to remove the solvent.

The reactants must be able to function as oxidizers for the exothermic combustion reaction and must naturally also be soluble in the solvent used to form the homogeneous solution, when combustion synthesis employing a homogenous solution is used. Thus, nitrates, acetates, sulphates and carbonates of lithium and other metals can be used. The reactants may thus be in the form of metal nitrates, metal acetates, metal sulphates and/or metal carbonates. In one embodiment of the invention, the reactants are in the form of metal acetates, e.g. Li (COOCH₃)_{2•}2H₂O, Mn(COOCH₃)_{2•}4H₂O, Ni(COOCH₃)_{2•}4H₂O and Co(COOCH₃)_{2•}4H₂O.

The Li-containing olivine material is in the form of a powder, e.g. powdered or granulated LiFePO₄.

The solvent may be water, e.g. deionized water. The process may thus include dissolving the reactants and the Li-containing olivine material in water to form the homogenous solution.

The homogeneous solution may include a combustion aid or fuel for the exothermic combustion reaction. The fuel may be an organic fuel, and may be urea, glycine, a hydrazide, sucrose or an organic acid such as citric acid; however, an organic acid such as citric acid is preferred.

The combustion synthesis may include ensuring that the homogenous solution is acidic. Preferably, the pH of the homogenous solution is between about 0 and about 6, more preferably between about 0.1 and about 5, most preferably between about 1 and about 3, e.g. about 2. The pH may be adjusted by addition of the fuel, when the fuel is an organic acid.

The invention extends to a Li-rich dual active cathode material precursor and to a Li-rich dual active cathode material when produced by the process as hereinbefore described.

According to the invention, there is also provided a Li-rich dual active cathode material precursor or a Li-rich dual active cathode material which includes a Li-containing olivine material occluded in a Li-rich layered oxide.

The Li-containing olivine material may be as hereinbefore described.

The Li-rich layered oxide may be as hereinbefore described.

The molar ratio of the Li-containing olivine material to the Li-rich layered oxide may be as hereinbefore described.

According to the invention, there is also provided an electrochemical cell, which includes
a cell housing; and
a cathode, an anode and an electrolyte in the cell housing,
in which the cathode is electronically insulated from the anode but electrochemically coupled thereto by the electrolyte, the cathode including the Li-rich dual active cathode material as hereinbefore described.

According to the invention, there is also provided a method of making an electrochemical cell which includes loading, into a cell housing, an electrolyte, an anode and a cathode, with the cathode including the Li-rich dual active cathode material as hereinbefore described.

The Li-rich dual active cathode material may have a discharge capacity of at least about 180 mA h g⁻¹, preferably at least about 200 mA h g⁻¹, more preferably at least about 250 mA h g⁻¹, e.g. about 280 mA h g⁻¹.

According to the invention, there is also provided a method of operating an electrochemical cell, which method includes
applying a charging potential to the electrochemical cell as hereinbefore described, but in which the Li-rich dual active cathode material includes manganese, thereby causing lithium from the cathode to form at least part of the anode; and
permitting the discharging potential of the cell to reach 2.0 - 3.5 V vs. lithium metal, and with the average manganese valence state being about 3.5+ or higher during charge and discharge of the cell.

The charging potential of the cell may be permitted to reach 4.5 - 5.1 V vs lithium metal. The average manganese valence state may be about 3.8+ or higher during charge and discharge of the cell.

The invention is now described in more detail with reference to the following example and the single accompanying diagrammatic drawing which shows the capacity of a Li_{1.2}Mn_{0.54}Ni_{0.13}Co_{0.13}O₂/LiFePO₄ nano-occluded cathode material in accordance with the invention.

### Example

A dual-active Li_{1.2}Mn_{0.54}Ni_{0.13}Co_{0.13}O₂/LiFePO₄ nano-occluded cathode material was obtained through a combustion synthesis pathway. A stoichiometric mass of each of the acetates Li(COOCH₃)₂·2H₂O, Mn(COOCH₃)₂·4H₂O, Ni(COOCH₃)₂·4H₂O and Co(COOCH₃)₂·4H₂O were dissolved in deionized water to form a solution. Citric acid (C₆H₈O₇) as fuel was added to the solution and the pH of the solution was adjusted to 2 with the addition of the citric acid. Thereafter, LiFePO₄ powder was added to the solution in a molar ratio of Li_{1.2}Mn_{0.54}Ni_{0.13}Co_{0.13}O₂:LiFePO4 of about 1:0.05. The LiFePO₄ provides oxygen atoms that have stronger bonds than those of Li_{1.2}Mn_{0.54}Ni_{0.13}Co_{0.13}O₂.

The solution was stirred for 1hr and heated to 100°C on a hot plate to evaporate the water from the solution. A resultant reaction mixture of solids obtained was a pinkish substance that ignited, when obtained at 100°C on a hot plate, in fumes to form a Li-rich dual active cathode material precursor in the form of a fine brown powder. Thereafter, the Li-rich dual active cathode material precursor powder was annealed by heating the powder in an argon blown furnace at 300°C for 3 hrs (a first heating) and subsequently by heating the powder at 800°C for 12 hrs (second heating) to produce the dual-active Li_{1.2}Mn_{0.54}Ni_{0.13}Co_{0.13}O₂/LiFePO₄ nano-occluded cathode material. The heating rate was 5°C/min.

The LiFePO₄ nanoparticles (5-100nm) randomly distributed and occluded within the annealed Li_{1.2}Mn_{0.54}Ni_{0.13}Co_{0.13}O₂/LiFePO₄ nano-occluded cathode material.

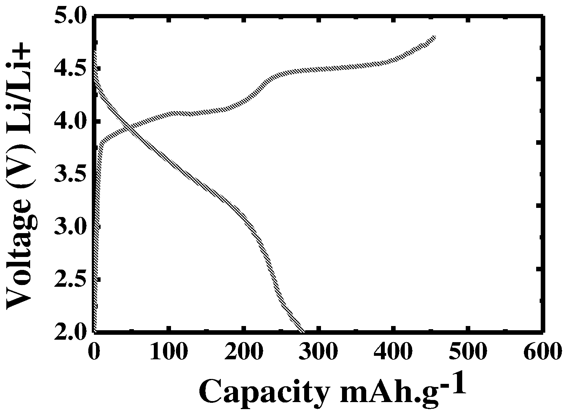

The capacity of the Li_{1.2}Mn_{0.54}Ni_{0.13}Co_{0.13}O₂/LiFePO₄ nano-occluded cathode material produced is shown in the drawing. As will be noted, the cathode material of the invention, as exemplified, has a large capacity in excess of 200 mA h g⁻¹. This compares well with commercially available cathode materials such as LiCoO₂ (140 mA h g⁻¹), Li₂MnO₄ (120 mA h g⁻¹) and LiFePO₄ (150 mA h g⁻¹). The cathode material has decent cyclability and rate performance compared with Li_{1.2}Mn_{0.54}Ni_{0.13}Co_{0.13}O₂ and is produced using a simple preparation method and relatively low cost, environmentally friendly materials. Li_{1.2}Mn_{0.54}Ni_{0.13}Co_{0.13}O₂ possesses a high specific energy and LiFePO₄ possesses a high rate capability. Their combination as a nano-occluded cathode material mitigates capacity and cyclability losses advantageously providing a high capacity dual-rate energy storage system.

## Claims

1. A process for producing a Li-rich dual active cathode material precursor, the process including
occluding a Li-containing olivine material in a Li-rich layered oxide by means of combustion synthesis to provide a Li-rich dual active cathode material precursor in powder or granulate form.

2. The process of claim 1, which includes
annealing the Li-rich dual active cathode material precursor by heating the powder or granulate to a first temperature and maintaining the powder or granulate at the first temperature for a first period, and heating the powder or granulate to a second temperature and maintaining the powder or granulate at the second temperature for a second period, wherein the first temperature is between 100°C and 700°C and the first period is between 30 minutes and 1200 minutes and wherein the second temperature is between 550°C and 1000°C and the second period is between 2 hours and 24 hours thereby to provide a Li-rich dual active cathode material.

3. The process of claim 1 or claim 2, in which the Li-containing olivine material is selected from the group consisting of LiFePO₄, LiCoPO₄, LiNiPO₄, LiMnPO₄, Li₃V₂(PO₄)₃, and mixtures of two or more thereof, or in which the Li-rich layered oxide is a Li-rich double-layered oxide or spinel, or in which the Li-rich layered oxide is a Li-rich Mn-based layered oxide.

4. The process of any of claims 1 to 3, in which the Li-rich layered oxide has the general formula Li[LiₓM₁₋ₓ]O₂ where M = Mn, Ni, Co, Al and 0 < x < 1.

5. The process of any of claims 1 to 4, in which the Li-rich layered oxide is selected from the group consisting of Li_{1.2}Mn_{0.54}Ni_{0.13}Co_{0.13}O₂, Li[LiₓMn_{y}Ni_{z}M_{k]}O₂ where M = Co, Fe, Al, 0<x, and x+y+z+k=1, and mixtures of two or more thereof.

6. A Li-rich dual active cathode material precursor which includes a Li-containing olivine material occluded in a Li-rich layered oxide, or a Li-rich dual active cathode material which includes a Li-containing olivine material occluded in a Li-rich layered oxide, wherein the Li-rich dual active cathode material precursor is obtained by the process as claimed in claim 1 and wherein the Li-rich dual active cathode material is obtained by the process as claimed in claim 2.

7. The Li-rich dual active cathode material precursor or the Li-rich dual active cathode material of claim 6, in which the Li-containing olivine material is selected from the group consisting of LiFePO₄, LiCoPO₄, LiNiPO₄, LiMnPO₄, Li₃V₂(PO₄)₃, and mixtures of two or more thereof, or in which the Li-rich layered oxide is a Li-rich double-layered oxide or spinel, or in which the Li-rich layered oxide is a Li-rich Mn-based layered oxide.

8. The Li-rich dual active cathode material precursor or the Li-rich dual active cathode material of any of claims 6 or 7 in which the Li-rich layered oxide has the general formula Li[LiₓM₁₋ₓ]O₂ where M = Mn, Ni, Co, Al and 0 < x < 1.

9. The Li-rich dual active cathode material precursor or the Li-rich dual active cathode material of any of claims 6 to 8, in which the Li-rich layered oxide is selected from the group consisting of Li_{1.2}Mn_{0.54}Ni_{0.13}Co_{0.13}O₂, Li[LiₓMn_{y}Ni_{z}M_{k]}O₂ where M = Co, Fe, Al, 0<x, and x+y+z+k=1, and mixtures of two or more thereof, or in which the molar ratio of the Li-rich layered oxide to the Li-containing olivine material is between 1:0.01 and 1:1 or between 1:0.01 and 1:0.2 or between 1:0.02 and 1:0.1.

10. An electrochemical cell, which includes
a cell housing; and
a cathode, an anode and an electrolyte in the cell housing,
in which the cathode is electronically insulated from the anode but electrochemically coupled thereto by the electrolyte, the cathode including the Li-rich dual active cathode material of any of claims 6 to 9.

11. A method of making an electrochemical cell which includes loading, into a cell housing, an electrolyte, an anode and a cathode, with the cathode including the Li-rich dual active cathode material of any of claims 6 to 9.

12. The method of making an electrochemical cell of claim 11, in which the Li-rich dual active cathode material has a discharge capacity of at least 180 mA h g⁻¹ or at least 200 mA h g⁻¹ or at least 250 mA h g⁻¹.

13. A method of operating an electrochemical cell, which method includes
applying a charging potential to the electrochemical cell of claim 10, but in which the Li-rich dual active cathode material includes manganese, thereby causing lithium from the cathode to form at least part of the anode; and
permitting the discharging potential of the cell to reach 2.0 - 3.5 V vs. lithium metal, and with the average manganese valence state being 3.5+ or higher during charge and discharge of the cell.

14. The method of operating an electrochemical cell of claim 13, in which the charging potential of the cell is permitted to reach 4.5 - 5.1 V vs lithium metal and/or in which the average manganese valence state is 3.8+ or higher during charge and discharge of the cell.

## Patentansprüche

1. Verfahren zur Herstellung eines Li-reichen dualen aktiven Kathodenmaterialvorläufer, wobei das Verfahren umfasst:
Einschließen eines Li-haltigen Olivinmaterials in ein Li-reiches Schichtoxid mittels Verbrennungssynthese, um einen Li-reichen dualen aktiven Kathodenmaterialvorläufer in Pulver- oder
Granulatform bereitzustellen.

2. Verfahren nach Anspruch 1, umfassend das Tempern des Li-reichen dualen aktiven Kathodenmaterialvorläufers durch Erhitzen des Pulvers oder Granulats auf eine erste Temperatur und Halten des Pulvers oder Granulats auf der ersten Temperatur für eine erste Periode und Erhitzen des Pulvers oder Granulats auf eine zweite Temperatur und Halten des Pulvers oder Granulats auf der zweiten Temperatur für eine zweite Periode, wobei die erste Temperatur zwischen 100°C und 700°C liegt und die erste Periode zwischen 30 Minuten und 1200 Minuten beträgt und wobei die zweite Temperatur zwischen 550°C und 1000°C liegt und die zweite Periode zwischen 2 Stunden und 24 Stunden beträgt, um dadurch ein Li-reiches, doppelt aktives Kathodenmaterial bereitzustellen.

3. Verfahren nach Anspruch 1 oder Anspruch 2, wobei das Li-haltige Olivinmaterial ausgewählt ist aus der Gruppe bestehend aus LiFePO₄, LiCoPO₄, LiNiPO₄, LiMnPO₄, Li₃V₂(PO₄)₃ und Mischungen von zwei oder mehreren davon oder wobei das Li-reiche Schichtoxid ein Li-reiches Doppelschichtoxid oder Spinell ist oder wobei das Li-reiche Schichtoxid ein Li-reiches Schichtoxid auf Mn-Basis ist.

4. Verfahren nach einem der Ansprüche 1 bis 3, wobei das Li-reiche Schichtoxid die allgemeine Formel Li[LiₓM₁₋ₓ]O₂ aufweist, wobei M = Mn, Ni, Co, Al und 0 < x < 1.

5. Verfahren nach einem der Ansprüche 1 bis 4, wobei das Li-reiche Schichtoxid ausgewählt ist aus der Gruppe bestehend aus Li_{1,2}Mn_{0.54}Ni_{0,13}Co_{0,13}O₂, Li[LiₓMn_{y}Ni_{z}M_{k]}O₂ mit M = Co, Fe, Al, 0<x, und x+y+z+k=1, und Mischungen von zwei oder mehreren davon.

6. Li-reicher dualer aktiver Kathodenmaterialvorläufer oder Li-reiches duales aktives Kathodenmaterial, umfassend ein Li-haltiges Olivinmaterial, das in ein Li-reiches Schichtoxid eingeschlossen ist, oder ein Li-reiches duales aktives Kathodenmaterial, umfassend ein Li-haltiges Olivinmaterial, das in ein Li-reiches Schichtoxid eingeschlossen ist, wobei der Li-reiche duale aktive Kathodenmaterialvorläufer durch das Verfahren nach Anspruch 1 erhalten wird und wobei das Li-reiche duale aktive Kathodenmaterial durch das Verfahren nach Anspruch 2 erhalten wird.

7. Li-reicher dualer aktiver Kathodenmaterialvorläufer oder Li-reiches duales aktives Kathodenmaterial nach Anspruch 6, wobei das Li-haltige Olivinmaterial ausgewählt ist aus der Gruppe bestehend aus LiFePO₄, LiCoPO₄, LiNiPO₄, LiMnPO₄, Li₃V₂(PO₄)₃ und Mischungen von zwei oder mehreren davon oder wobei das Li-reiche Schichtoxid ein Li-reiches Doppelschichtoxid oder Spinell ist oder wobei das Li-reiche Schichtoxid ein Li-reiches Schichtoxid auf Mn-Basis ist.

8. Li-reicher dualer aktiver Kathodenmaterialvorläufer oder Li-reiches duales aktives Kathodenmaterial nach einem der Ansprüche 6 oder 7, wobei das Li-reiche geschichtete Oxid die allgemeine Formel Li[LiₓM₁₋ₓ]O₂ aufweist, wobei M = Mn, Ni, Co, Al und 0 < x < 1.

9. Li-reicher dualer aktiver Kathodenmaterialvorläufer oder Li-reiches duales aktives Kathodenmaterial nach einem der Ansprüche 6 bis 8, wobei das Li-reiche Schichtoxid ausgewählt ist aus der Gruppe bestehend aus Li_{1,2}Mn_{0.54}Ni_{0,13}Co_{0,13}O₂, Li[LiₓMn_{y}Ni_{z}Mₖ]O₂ wobei M = Co, Fe, Al, 0<x, und x+y+z+k=1, und Mischungen von zwei oder mehreren davon, oder wobei das molare Verhältnis des Li-reichen Schichtoxids zu dem Li-haltigen Olivinmaterial zwischen 1:0,01 und 1:1 oder zwischen 1:0,01 und 1:0,2 oder zwischen 1:0,02 und 1:0,1 liegt.

10. Eine elektrochemische Zelle, umfassend:
ein Zellengehäuse; und
eine Kathode, eine Anode und einen Elektrolyten in dem Zellengehäuse,
wobei die Kathode elektronisch von der Anode isoliert, aber durch den Elektrolyten elektrochemisch mit ihr gekoppelt ist, wobei die Kathode das Li-reiche duale aktive Kathodenmaterial nach einem der Ansprüche 6 bis 9 enthält.

11. Verfahren zur Herstellung einer elektrochemischen Zelle, umfassend das Einbringen eines Elektrolyten, einer Anode und einer Kathode in ein Zellengehäuse, wobei die Kathode das Li-reiche duale aktive Kathodenmaterial nach einem der Ansprüche 6 bis 9 enthält.

12. Verfahren zur Herstellung einer elektrochemischen Zelle nach Anspruch 11, wobei das Li-reiche dual-aktive Kathodenmaterial eine Entladekapazität von mindestens 18 mA h g⁻¹ oder mindestens 200 mA h g⁻¹ oder mindestens 250 mA h g⁻¹ aufweist.

13. Verfahren zum Betreiben einer elektrochemischen Zelle, wobei das Verfahren umfasst:
Anlegen eines Ladepotentials an die elektrochemische Zelle nach Anspruch 10, wobei jedoch das Li-reiche dual-aktive Kathodenmaterial Mangan enthält, wodurch bewirkt wird, dass Lithium aus der Kathode zumindest einen Teil der Anode bildet; und
Ermöglichen, dass das Entladepotenzial der Zelle 2,0-3,5 V gegenüber Lithiummetall erreicht und der durchschnittliche Mangan-Wertigkeitszustand während des Ladens und Entladens der Zelle 3,5+ oder höher ist.

14. Verfahren zum Betreiben einer elektrochemischen Zelle nach Anspruch 13, bei dem das Ladepotential der Zelle 4,5 - 5,1 V gegenüber Lithiummetall erreichen darf und/oder bei dem der durchschnittliche Mangan-Wertigkeitszustand während des Ladens und Entladens der Zelle 3,8+ oder höher ist.

## Revendications

1. Procédé de production d'un précurseur de double matériau de cathode active riche en Li, le procédé comportant
l'occlusion d'un matériau d'olivine contenant du Li dans un oxyde stratifié riche en Li au moyen d'une synthèse par combustion pour fournir un précurseur de double matériau de cathode active riche en Li sous forme de poudre ou de granulé.

2. Procédé selon la revendication 1, qui comporte
le recuit du précurseur de double matériau de cathode active riche en Li en chauffant la poudre ou le granulé à une première température et en maintenant la poudre ou le granulé à la première température pendant une première période, et en chauffant la poudre ou le granulé à une seconde température et en maintenant la poudre ou le granulé à la seconde température pendant une seconde période, dans lequel la première température est comprise entre 100 °C et 700 °C et la première période est comprise entre 30 minutes et 1200 minutes et dans lequel la seconde température est comprise entre 550°C et 1000°C et le la seconde période est comprise entre 2 heures et 24 heures pour fournir ainsi un double matériau de cathode active riche en Li.

3. Procédé selon la revendication 1 ou la revendication 2, dans lequel le matériau d'olivine contenant du Li est choisi dans le groupe constitué de LiFePO₄, LiCoPO₄, LiNiPO₄, LiMnPO₄, Li₃V₂(PO₄)₃, et des mélanges de deux ou plus de ceux-ci, ou dans lequel l'oxyde stratifié riche en Li est un spinelle ou oxyde bicouche riche en Li, ou dans lequel l'oxyde stratifié riche en Li est un oxyde stratifié riche en Li à base de Mn.

4. Procédé selon l'une quelconque des revendications 1 à 3, dans lequel l'oxyde stratifié riche en Li a la formule générale Li[LiₓM₁₋ₓ]O₂ où M = Mn, Ni, Co, Al et 0 < x< 1.

5. Procédé selon l'une quelconque des revendications 1 à 4, dans lequel l'oxyde stratifié riche en Li est choisi dans le groupe constitué de Li_{1.2}Mn_{0,54}Ni_{0,13}Co_{0,13}O₂, Li[LiₓMn_{y}Ni_{z}Mₖ]O₂ où M = Co, Fe, Al, 0<x, et x+y+z+k=1, et des mélanges de deux ou plus de ceux-ci.

6. Précurseur de double matériau de cathode active riche en Li qui comporte un matériau d'olivine contenant du Li occlus dans un oxyde stratifié riche en Li, ou un double matériau de cathode active riche en Li qui comporte un matériau d'olivine contenant du Li occlus dans un oxyde stratifié riche en Li, dans lequel le précurseur de double matériau de cathode active riche en Li est obtenu par le procédé selon la revendication 1 et dans lequel le double matériau de cathode active riche en Li est obtenu par le procédé selon la revendication 2.

7. Précurseur de double matériau de cathode active riche en Li ou double matériau de cathode active riche en Li selon la revendication 6, dans lequel le matériau d'olivine contenant du Li est choisi dans le groupe constitué de LiFePO₄, LiCoPO₄, LiNiPO₄, LiMnPO₄, Li₃V₂(PO₄)₃, et des mélanges de deux ou plus de ceux-ci, ou dans lequel l'oxyde stratifié riche en Li est un spinelle ou oxyde bicouche riche en Li, ou dans lequel l'oxyde stratifié riche en Li est un oxyde stratifié riche en Li à base de Mn.

8. Précurseur de double matériau de cathode active riche en Li ou double matériau de cathode active riche en Li selon l'une quelconque des revendications 6 ou 7, dans lequel l'oxyde stratifié riche en Li a la formule Li[LiₓM₁₋ₓ]O₂ où M = Mn, Ni, Co, Al et 0 < x < 1.

9. Précurseur de double matériau de cathode active riche en Li ou double matériau de cathode active riche en Li selon l'une quelconque des revendications 6 à 8, dans lequel l'oxyde stratifié riche en Li est choisi dans le groupe constitué de Li_{1.2}Mn_{0,54}Ni_{0,13}Co_{0,13}O₂, Li[LiₓMn_{y}Ni_{z}Mₖ]O₂ où M = Co, Fe, Al, 0<x, et x+y+z+k=1, et des mélanges de deux ou plus de ceux-ci, ou dans lequel le rapport molaire de l'oxyde stratifié riche en Li sur le matériau d'olivine contenant du Li est compris entre 1:0,01 et 1:1 ou entre 1:0,01 et 1:0,2 ou entre 1:0,02 et 1:0,1.

10. Cellule électrochimique, qui comporte
un logement de cellule ; et
une cathode, une anode et un électrolyte dans le logement de cellule,
dans laquelle la cathode est isolée électroniquement de l'anode mais couplée de manière électrochimique à celle-ci par l'électrolyte, la cathode comportant le double matériau de cathode active riche en Li selon l'une quelconque des revendications 6 à 9.

11. Procédé de fabrication d'une cellule électrochimique qui comporte le chargement, dans un logement de cellule, d'un électrolyte, d'une anode et d'une cathode, la cathode comportant le double matériau de cathode active riche en Li selon l'une quelconque des revendications 6 à 9.

12. Procédé de fabrication d'une cellule électrochimique selon la revendication 11, dans lequel le double matériau de cathode active riche en Li a une capacité de décharge d'au moins 180 mA h g⁻¹ ou d'au moins 200 mA h g⁻¹ ou d'au moins 250 mA h g⁻¹.

13. Procédé de fonctionnement d'une pile électrochimique, lequel procédé comporte
l'application d'un potentiel de charge à la pile électrochimique selon la revendication 10, mais dans lequel le double matériau de cathode active riche en Li comporte du manganèse, amenant ainsi le lithium de la cathode à former au moins une partie de l'anode ; et
la permission au potentiel de décharge de la cellule d'atteindre 2,0 à 3,5 V par rapport au lithium métal, et avec un état de valence moyen de manganèse de 3,5+ ou plus pendant la charge et la décharge de la cellule.

14. Procédé de fonctionnement d'une cellule électrochimique selon la revendication 13, dans lequel il est permis au potentiel de charge de la cellule d'atteindre 4,5 à 5,1 V par rapport au lithium métal et/ou dans lequel l'état de valence moyen de manganèse est de 3,8+ ou plus pendant la charge et décharge de la cellule.
